# EUROPÄISCHE PATENTSCHRIFT

(11) **EP 0 557 749 B1**
(45) Veröffentlichungstag und Bekanntmachung des Hinweises auf die Patenterteilung: **20.05.1998**
(21) Anmeldenummer: 93101679.4
(22) Anmeldetag: 04.02.1993
(51) Int. Cl.: C12G 3/08

(54) **Vorrichtung für eine Entalkoholisierungsanlage**
Device for a dealcoholisation apparatus
Dispositif pour une installation de désalcoholisation

(30) Priorität: 23.02.1992 DE 4205434
(43) Veröffentlichungstag der Anmeldung: 01.09.1993
(73) Patentinhaber: EAZ GmbH, D-71336 Waiblingen (DE); W. Schmidt-Bretten GmbH, D-75015 Bretten (DE)
(72) Erfinder: Petershans, Horst, W-7050 Bittenfeld (DE); Körner, Rudolf, W-7518 Bretten/Ruit (DE)
(74) Vertreter: Kinkelin, Ulrich, Dipl.-Ing.

(56) Entgegenhaltungen:
- AT-A- 559 704
- DE-A- 3 843 516
- DE-C- 650 548

## Beschreibung

Die Erfindung betrifft eine Vorrichtung gemäß dem Oberbegriff des Hauptanspruchs.

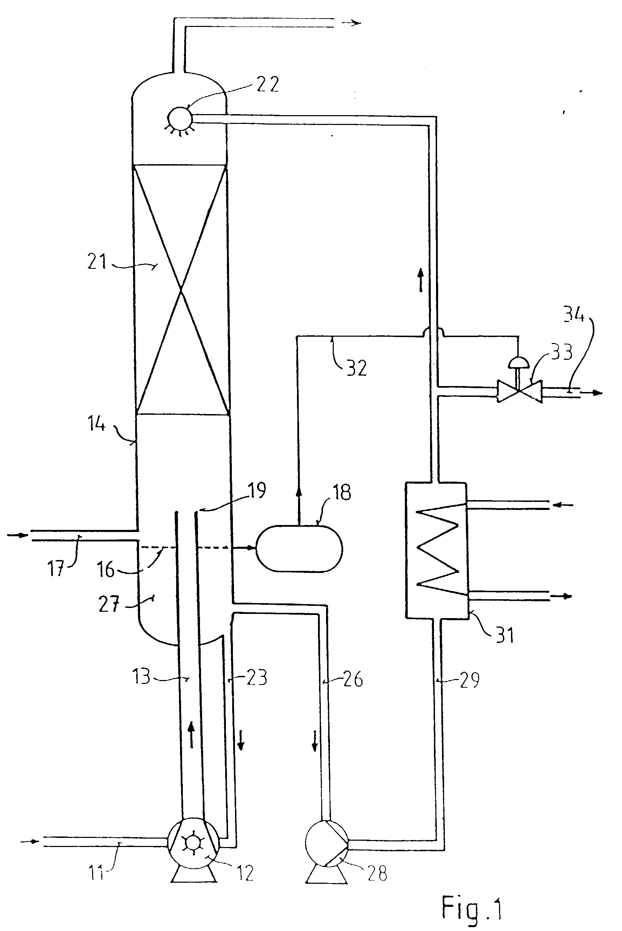

Eine solche Vorrichtung kann beispielsweise einer Entalkoholisierungsanlage gemäß der DE-A 3 843 516 nachgeschaltet sein. Entalkoholisierungsanlagen arbeiten mit einem Vakuum. In diesem Fall wird dort das Vakuum durch die einzige Vakuumpumpe (rechts unten in Figur 1) erzeugt. Durch die Leitung wird das Vakuum aufrecht erhalten. Dieses bleibt nicht beständig bestehen. Dies weniger wegen Luftundichtigkeiten, sondern deshalb, weil ja über die Leitung Trinkflüssigkeiten, z. B. in Form von Wein oder Bier, zugeführt wird. Zumindest in diesem Maß, in dem hier eine Flüssigkeitszufuhr erfolgt, aber auch wegen der Wärmeexpansion und aus anderen Gründen reicht es nicht aus, daß man einmalig ein Vakuum erzeugt. Vielmehr muß dieses kontinuierlich aufrecht erhalten werden. Das Wort "Vakuum" ist hier nicht wörtlich zu nehmen, denn ein absolutes Vakuum ist wirtschaftlich nicht herstellbar. Man kann sich zur Herstellung dieses Vakuums einer oder mehrerer Vakuumpumpen bedienen. Üblicherweise werden Wasserring-Vakuumpumpen verwendet. Man kann jedoch auch Drehschieber-Vakuumpumpen verwenden oder auch Venturi-Düsen, mit denen es gelingt, einen noch niedrigeren Unterdruck auf billigere Weise zu erzielen wie mit den Wasserring-Vakuumpumpen.

Wein, Apfelwein, Beerenwein, Bimenwein usw. hat 400 flüchtige Aromastoffe. Die Mehrzahl dieser Weine hat - was auch notwendig und zulässig ist - H₂SO₃ (schwefelige Säure), damit die Oxidation verhindert wird.

Die Vakuumpumpen haben nun die Eigenschaft, z. B. über die Leitung des Standes der Technik, flüchtige Bestandteile abzuziehen und über deren Luftstutzen oder dergleichen in die Umgebung zu entlassen. Wenn man in diesen Abluftstutzen riecht, dann riecht es nach Schwefel und/oder Aromastoffen. Die Umweltbelastung ist zwar gering, jedoch fehlen dem Endprodukt diese Stoffe. Man möchte ja beim Reduzieren des Alkoholgehaltes im Idealfall lediglich den Ethylalkohol entfernen, nicht jedoch die Aromastoffe. Man möchte einen Filter mit einem unendlich hohen Entalkoholisierungs-Wirkungsgrad. Außerdem soll die im Alkohol reduzierte Flüssigkeit auch stabil sein, so daß sie eine genügend hohe Lebensdauer hat.

Aufgabe der Erfindung ist es, eine Vorrichtung und ein Verfahren zur Anreicherung einer Trinkflüssigkeit mit leicht flüchtigen Aromastoffen zur Verfügung zu stellen.

Erfindungsgemäß wird diese Aufgabe durch eine Vorrichtung zur Anreicherung einer Trinkflüssigkeit mit leicht flüchtigen Aromastoffen, welche einer den Alkoholgehalt von Trinkflüssigkeiten reduzierenden Anlage nachgeschaltet ist, gelöst, wobei eine Vakuumpumpe über eine Ansaugleitung leicht flüchtige Aromastoffe ansaugt, eine von der Vakuumpumpe abführende Leitung zu einem Gehäuse führt, dem über eine Leitung die Trinkflüssigkeit zugeführt wird und eine Leitung vorgesehen ist, durch die der Vakuumpumpe zumindest ein Teilstrom der Trinkflüssigkeit als Betriebsflüssigkeit zugeführt wird, wobei der Teilstrom in der Vakuumpumpe mit den leicht flüchtigen Aromastoffen in Kontakt gebracht wird.

Damit wird auch der letzte Rest an Aromastoffen wieder zurückgeführt. Je besser die Sensorik des Konsumenten ist, desto empfindlicher reagiert er auf fehlende flüchtige Aromastoffe. Manche leicht flüchtige Aromastoffe verflüchtigen sich schon bei 10 ° bis 15 °C. Man hat jetzt also z. B. den gesamten Amylalkohol, alle Amylacetate, ferner viele Ester-Komponenten und leichtflüssige Alkohole.

Außerdem spaltet sich ja unter Wärmeeinwirkung die H₂SO₃ in H₂O und So₂ auf. Fügt man nun wieder das Schwefeldioxid SO₂ dem Wasser zu, dann löst es sich wieder in schwefelige Säure.

Die Erfindung wird nunmehr anhand eines bevorzugten Ausführungsbeispiels beschrieben. In der Zeichnung zeigen:
- Figur 1: ein Schaltschema
- Figur 2: den Querschnitt durch eine Wasserring-Vakuumpumpe.

Geht man von der DE-OS 38 43 516 als Stand der Technik aus, dann entspricht die hier gezeichnete Leitung der dortigen Leitung 11 zwischen einem Kühler und einer Vakuumpumpe, und eine Vakuumpumpe 12 entspricht der dortigen Vakuumpumpe. Die Erfindung kann jedoch auch einer Vorrichtung nach dem Zentriterm-Verfahren und dem Eindampf-Verfahren nachgeschaltet sein, die beide mit Unterdruck arbeiten. Aber auch Osmose-Vorrichtungen oder Dialyse-Vorrichtungen können der erfindungsgemäßen Vorrichtung vorgeschaltet sein, obwohl diese Vorrichtungen primär nicht mit Unterdruck arbeiten. Da jedoch große Mengen Restflüssigkeiten anfallen, werden auch bei diesen Verfahren bzw. Vorrichtungen die Restmengen thermisch weiter im Alkoholgehalt reduziert, wobei diese mit Unterdruck arbeiten. Die Reduktion kann einige Prozente betragen. Als entalkoholisiert gilt eine Trinkflüssigkeit, bei der der Alkoholgehalt auf 0,5 % Vol. reduziert worden ist.

Die erfindungsgemäße Vorrichtung erlaubt, auf 0,06 % Vol. zu reduzieren.

Gemäß dem Ausführungsbeispiel geht von der Vakuumpumpe 12 eine Abluftleitung 13 aus, die innerhalb eines Gaswäschers, der als senkrecht stehendes, längliches Gehäuse ausgebildet ist, endet und zwar oberhalb eines Niveaus 16. Oberhalb dieses Niveaus 16 mündet eine Leitung 17 für das entalkoholisierte Produkt. Je nach Menge, auf die die Anlage ausgelegt ist, kann durch die Leitung 17 das gesamte Volumen des entalkoholisierten Produktes oder auch nur ein Teilvolumen fließen. Die Höhe des Niveaus 16 wird von einem Niveauschalter 18 abgetastet. Das obere Ende 19 der Abluftleitung 13 muß immer oberhalb des Niveaus 16 liegen. Im mittleren bis oberen Bereich des Gehäuses 14 ist eine Füllkörperkolonne 21 vorgesehen, die eine sehr große Oberfläche hat. Oberhalb der Füllkörperkolonne 21 ist eine als Zufuhrvorrichtung ausgebildete Sprühvorrichtung 22 vorgesehen. Diese Sprühvorrichtung 22 weist vorteilhafterweise eine Feinsprühdüse auf. Mit dieser wird die entalkoholisierte Flüssigkeit versprüht, die damit nach unten über die große Fläche der Füllkörperkolonne 21 rieselt. Von unten aus dem Ende 19 kommend, steigen die flüchtigen Inhaltsstoffe nach oben und vereinigen sich mit der von oben kommenden entalkoholisierten Flüssigkeit.

Erheblich unterhalb des Niveaus 16 geht eine Leitung 23 ab, die entalkoholisierte Flüssigkeit einem "Wasserring" 24 der Vakuumpumpe 12 zupumpt. Bereits dort vereinigen sich mindestens zum Teil die flüchtigen Inhaltsstoffe mit der entalkoholisierten Flüssigkeit, die ja oberhalb der Vakuumpumpe 12 bis zum Niveau 16 steht und damit einen bestimmten hydrostatischen Druck hat.

So wie die Leitung 23 entnimmt eine weitere Leitung 26 entalkoholisierte Flüssigkeit diesem Flüssigkeitsvolumen 27. Es wird über eine Pumpe 28 mit einer Leitung 29 zur Sprühvorrichtung 22 gepumpt. Dabei durchläuft die Flüssigkeit einen Kühler 31, denn die Absorbtionsfähigkeit wird noch größer, wenn die mit der Sprühvorrichtung 22 versprühte Flüssigkeit kühl ist. Der Niveauschalter 18 ist über eine elektrische Leitung 32 mit einem Magnetventil 33 verbunden. Steigt das Niveau 16 zu sehr an, dann macht das Magnetventil 33 auf und ein Teil der entalkoholisierten Flüssigkeit fließt aus der Leitung 29 heraus über die Leitung 34 ab. Verbraucht die Vakuumpumpe für ihren Wasserring 24 soviel entalkoholisierte Flüssigkeit, wie erzeugt wird, dann kommt aus der Leitung 34 das gesamte Volumen des entalkoholisierten Produkts. Andemfalls führt die Leitung 34 dorthin, wo das entalkoholisierte Produkt gesammelt wird. im Stand der Technik letztendlich in den Vorratsbehälter.

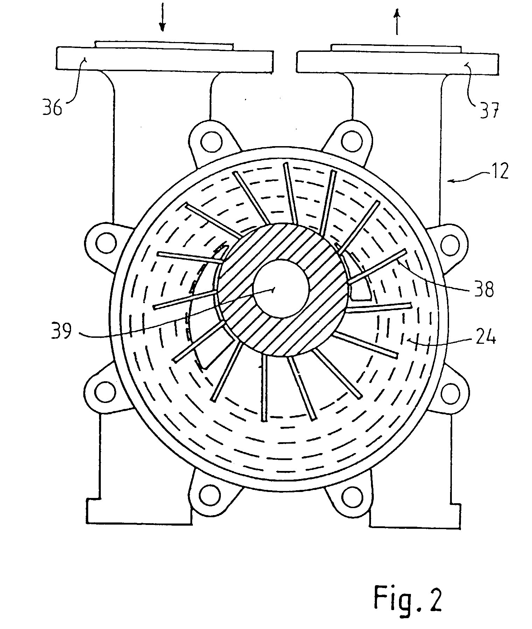

Die Vakuumpumpe 12 gemäß Figur 2 weist einen Ansaugstutzen 36 auf, an dem die Leitung 11 mündet und den Abluftstutzen 37, von dem die Leitung 13 ausgeht. Die Leitung 23 ist auf nicht dargestellte Weise am Volumen des Wasserrings 34 angeschlossen, der - wie oben beschrieben - hier nicht aus Wasser, sondern aus entalkoholisierter Flüssigkeit besteht. Femer erkennt man die Schaufeln 38 sowie die von einem Motor angetriebene Drehwelle 39.

Bei schäumenden Trinkflüssigkeiten wie z. B. Bier, wird als Betriebsflüssigkeit für die Vakuumpumpe nicht die im Alkoholgehalt reduzierte Trinkflüssigkeit verwendet.

Vielmehr strömt dann bei der Leitung 17 Wasser ein. Im Fall von Bier kann dies Brauwasser sein. Im Fall von Wein kann dies entmineralisiertes Wasser sein. Hat man Leitungswasser einer Qualität, das den einschlägigen Stimmungen für Zusatzstoffe zu Getränken entspricht, so kann man auch Leitungswasser verwenden.

Dieses Wasser fließt bei der Leitung 17 ein, geht über die Leitung 26 zur Pumpe 28, steigt über die Leitung 29 und wird über die Sprühvorrichtung 22 oben im Gehäuse 14 versprüht. Mit diesem "Wasser" wird dann auch die Vakuumpumpe 12 betrieben, der nach wie vor über die Leitung 11 die gasförmigen, leicht flüchtigen Aromastoffe zugeführt werden. Im Falle von Bier fehlt das Schwefeldioxid.

Apparativ bleibt es also bei der Anordnung von Figur 1. Lediglich der Betrieb ist ein anderer. Dieses Wasser der Vakuumpumpe 12 wird in kontinuierlichem Fluß ausgetauscht, so daß es, wie im ersten Ausführungsbeispiel beschrieben, die Anlage nach Figur 1 durchfließt. Die Menge des zugeführten ,,Wassers" entspricht dabei zumindest im wesentlichen, vorzugsweise aber genau derjenigen Menge, die ein Alkoholkonzentrat aus der im Alkoholgehalt reduzierten Flüssigkeit entfernt wurde. Je nach gesetzlichen Anforderungen kann die Menge aber auch mehr oder weniger sein.

## Patentansprüche

1. Vorrichtung zur Anreicherung einer Trinkflüssigkeit mit leicht flüchtigen Aromastoffen, welche einer den Alkoholgehalt von Trinkflüssigkeiten reduzierenden Anlage nachgeschaltet ist, gekennzeichnet durch
- eine Vakuumpumpe (12), die über eine Ansaugleitung (11) leicht flüchtige Aromastoffe ansaugt,
- eine von der Vakuumpumpe (12) abführenden Leitung (13), die zu einem Gehäuse (14) führt, dem über eine Leitung (17) die Trinkflüssigkeit zugeführt wird,
- und einer Leitung (23), durch die der Vakuumpumpe (12) zumindest ein Teilstrom der Trinkflüssigkeit als Betriebsflüssigkeit zugeführt wird, wobei der Teilstrom in der Vakuumpumpe mit den leicht flüchtigen Aromastoffen in Kontakt gebracht wird.

2. Vorrichtung nach Anspruch 1, dadurch gekennzeichnet, daß die Vakuumpumpe (12) eine Wasserring-Vakuumpumpe oder eine Venturi-Düse ist.

3. Vorrichtung nach den Ansprüchen 1 und 2, dadurch gekennzeichnet, daß das Gehäuse (14) einen Gaswäscher umfaßt, insbesondere einen Gaswäscher, der nach dem Kondensations- und/oder Absorptionsprinzip arbeitet.

4. Vorrichtung nach Anspruch 3, dadurch gekennzeichnet, daß der Gaswäscher ein Gegenstrom-Gaswäscher ist.

5. Vorrichtung nach den Ansprüchen 1 bis 4, dadurch gekennzeichnet, daß das Gehäuse (14) oben eine Zufuhrvorrichtung (22) aufweist, die über eine unten am Gehäuse austretende Leitung (26) und eine Anschlußleitung (29) und eine Anschlußleitung (29) mit der Trinkflüssigkeit gespeist wird.

6. Vorrichtung nach Anspruch 5, dadurch gekennzeichnet, daß die Zufuhrvorrichtung (22) eine Feinsprühdüse umfaßt.

7. Vorrichtung nach den Ansprüchen 3 bis 6, dadurch gekennzeichnet, daß im Gaswäscher Füllkörper (21) vorgesehen sind, die im Betrieb von der Trinkflüssigkeit beaufschlagt werden.

8. Vorrichtung nach den Ansprüchen 5 bis 7, dadurch gekennzeichnet, daß die dem Gehäuse (14) über die Leitungen (26) und (29) und die Zufuhrvorrichtung (22) zugeführte Trinkflüssigkeit durch einen Kühler (31) geleitet wird.

9. Verfahren zur Anreicherung einer Trinkflüssigkeit mit leicht flüchtigen Aromastoffen unter Verwendung einer Vorrichtung nach einem oder mehreren der vorhergehenden Ansprüchen 1 bis 8.

10. Verfahren nach Anspruch 9, dadurch gekennzeichnet, daß die Trinkflüssigkeit eine im Alkoholgehalt reduzierte Trinkflüssigkeit ist.

11. Verfahren nach Anspruch 9, dadurch gekennzeichnet, daß die Trinkflüssigkeit Wasser ist.

12. Verfahren nach Anspruch 11, dadurch gekennzeichnet, daß das Wasser Brauwasser ist.

13. Verfahren nach Anspruch 11, dadurch gekennzeichnet, daß das Wasser entmineralisiertes Wasser ist.

14. Verfahren nach Anspruch 11, dadurch gekennzeichnet, daß das Wasser zugelassenes Qualitätstrinkwasser ist.

15. Verfahren nach den Ansprüchen 9 bis 14, dadurch gekennzeichnet, daß die leicht flüchtigen Aromastoffe SO₂ enthalten.

## Claims

1. Apparatus for enriching a potable liquid with readily volatile aroma compounds, which apparatus is connected downstream of a plant reducing the alcohol content of potable liquids, characterized by
- a vacuum pump (12) which draws in readily volatile aroma compounds by suction via a suction pipe (11),
- a pipe (13) leading off from the vacuum pump (12), which pipe leads to a shell (14) to which the potable liquid is fed via a pipe (17),
- and a pipe (23), through which at least a partial stream of the potable liquid is fed to the vacuum pump (12) as operating liquid, the partial stream being brought into contact, in the vacuum pump, with the readily volatile aroma compounds.

2. Apparatus according to Claim 1, characterized in that the vacuum pump (12) is a water-ring vacuum pump or a venturi nozzle.

3. Apparatus according to Claims 1 and 2, characterized in that the shell (14) comprises a gas scrubber, in particular a gas scrubber which operates by the condensation and/or absorption principle.

4. Apparatus according to Claim 3, characterized in that the gas scrubber is a countercurrent flow gas scrubber.

5. Apparatus according to Claims 1 to 4, characterized in that the shell (14) has at the top a feed apparatus (22) which is fed with the potable liquid via a pipe (26) which exits at the bottom of the shell and a connection pipe (29) and a connection pipe (29) [sic].

6. Apparatus according to Claim 5, characterized in that the feed apparatus (22) comprises a fine spray nozzle.

7. Apparatus according to Claims 3 to 6, characterized in that, in the gas scrubber, packings (21) are provided which are impinged in operation by the potable liquid.

8. Apparatus according to Claims 5 to 7, characterized in that the potable liquid which is fed to the shell (14) via the pipes (26) and (29) and the feed apparatus (22) is passed through a cooler (31).

9. Process for enriching a potable liquid with readily volatile aroma compounds using an apparatus according to one or more of the preceding Claims 1 to 8.

10. Process according to Claim 9, characterized in that the potable liquid is a potable liquid reduced in alcohol content.

11. Process according to Claim 9, characterized in that the potable liquid is water.

12. Process according to Claim 11, characterized in that the water is brewing water.

13. Process according to Claim 11, characterized in that the water is demineralized water.

14. Process according to Claim 11, characterized in that the water is approved quality drinking water.

15. Process according to Claims 9 to 14, characterized in that the readily volatile aroma compounds comprise SO₂.

## Revendications

1. Dispositif d'enrichissement d'une boisson par des arômes très volatils, qui est installé à la suite d'une installation réduisant la teneur en alcool de boissons, caractérisé par
- une pompe à vide (12), qui aspire des arômes très volatils par une conduite d'aspiration (11),
- une conduite (13) d'évacuation de la pompe à vide (12), qui mène à un boîtier (14) auquel la boisson est acheminée via une conduite (17), et
- une conduite (23), par laquelle au moins un courant partiel de la boisson est acheminé à la pompe à vide (12) comme liquide moteur, le courant partiel étant amené en contact avec les arômes très volatils dans la pompe à vide.

2. Dispositif selon la revendication 1, caractérisé en ce que la pompe à vide (12) est une pompe à vide à anneau d'eau ou un tube de Venturi.

3. Dispositif selon les revendications 1 et 2, caractérisé en ce que le boîtier (14) comprend un épurateur de gaz, en particulier un épurateur de gaz qui opère selon le principe de condensation et/ou d'absorption.

4. Dispositif selon la revendication 3, caractérisé en ce que l'épurateur de gaz est un épurateur de gaz à contre-courant.

5. Dispositif selon les revendications 1 à 4, caractérisé en ce que le boîtier (14) présente dans sa partie supérieure un dispositif d'alimentation (22) qui est alimenté en boisson par une conduite (26) sortant par la partie inférieure du boîtier et une conduite de raccordement (29).

6. Dispositif selon la revendication 5, caractérisé en ce que le dispositif d'alimentation (22) comprend une buse de fine pulvérisation.

7. Dispositif selon les revendications 3 à 6, caractérisé en ce qu'il est prévu dans l'épurateur de gaz des corps de garnissage (21) qui, en exploitation, sont alimentés en boisson.

8. Dispositif selon les revendications 5 à 7, caractérisé en ce que la boisson acheminée au boîtier (14) via les conduites (26) et (29) et le dispositif d'alimentation (22) est dirigée à travers un dispositif de réfrigération (31).

9. Procédé d'enrichissement d'une boisson par des arômes très volatils en utilisant un dispositif selon une ou plusieurs des revendications 1 à 8.

10. Procédé selon la revendication 9, caractérisé en ce que la boisson est une boisson dont la teneur en alcool est réduite.

11. Procédé selon la revendication 9, caractérisé en ce que la boisson est de l'eau.

12. Procédé selon la revendication 11, caractérisé en ce que l'eau est de l'eau de brassage.

13. Procédé selon la revendication 11, caractérisé en ce que l'eau est de l'eau déminéralisée.

14. Procédé selon la revendication 11, caractérisé en ce que l'eau est de l'eau potable de qualité autorisée.

15. Procédé selon les revendications 9 à 14, caractérisé en ce que les arômes très volatils contiennent du SO₂.
